# EUROPEAN PATENT APPLICATION

(11) **EP 1 496 431 A2**
(43) Date of publication of application: **12.01.2005**
(21) Application number: 04011534.7
(22) Date of filing: 14.05.2004
(51) Int. Cl.: G06F 9/30

(54) **High level micro-controller**

(30) Priority: 15.05.2003 GB 0311175
(71) Applicant: HORTON, Remy Andrew, Hertfordshire HP1 1RU (GB)
(72) Inventor: HORTON, Remy Andrew, Hertfordshire HP1 1RU (GB)
(74) Representative: Horton, Andrew Robert Grant

(57) **Abstract**

A high-level program language targeting a micro-controller and allowing the explicit specification of the timing of a specified action relative to a datum by means of a timing statement within a block of program code.

## Description

This invention relates to reprogrammable micro-controllers and a high level program language targeting a micro-controller. Such a micro-controller typically consists of one or more cores, each of which is a self-contained system-on-chip. The cores are capable of communicating via a message-passing communication network that is connected to every core. Each core is capable of running a few threads of execution. The micro-controller also preferably has two subsystems for handling communication with an external network. One such sub-system handles the input pins, and the other handles the output pins. All the cores would be connected to both of these subsystems.

In one aspect of the invention the micro-controller is adapted to be programmed in a high-level language that is specifically designed for the controller. This language has features that are intended to make it easier to create control programs that have timing-critical constraints. More particularly, code timing is explicitly specified by embedding timing-critical sections of code in blocks. Although it is possible to treat the entire program as timing-critical, allowing for just subsection to be timing-critical increases versatility. Within these timing-critical blocks (which can be nested), timing points are inserted that give an explicit indication of when specified actions should be performed. These timing points or statements may state the number of cycles that should have elapsed since the time-critical block was entered. In more versatile schemes, there would still be the timing points, but there would be a more diverse range of specifying the timing. For example it would be possible to allow timing point numbers to be specified relative to each other, rather than merely related to the start of the block.

According to this aspect of the invention therefore a micro-controller is arranged to operate in accordance with a program language, characterised in that timing of a specified action relative to a datum is explicitly specified by a timing point within a block of program code.

According to another aspect of the invention a micro-controller operates under the control of an assembly code which includes an instruction that specifies the performance of no operation for a specified plurality of machine cycles.

According to a further aspect of the invention a micro-controller operates under the control of an assembly code which includes an instruction that does not complete until a specific change in an input to at least one terminal pin occurs. More particularly the instruction may specify a given state which must be present and may specify a change in one of a multiplicity of pins. The code may include an instruction which encodes for the state of a pin and the number of times the pin has toggled since a previous read.

The code may further include an instruction that returns the number of executed cycles that have elapsed since a previous execution of the same or a different instruction.

These instructions have a utility independent of the use of timing points.

The detailed description which follows refers to the accompanying drawings, in which:
Figure 1 is a general view of the architecture of a micro-controller.
Figure 2 is a schematic diagram of an execution core.
Figure 3 is a schematic diagram of an arithmetic unit.
Figure 4 illustrates sets of registers

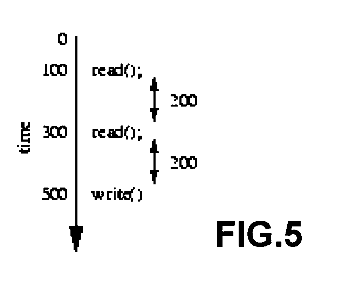

Figure 5 is a timing diagram
Figure 6 is a parse tree.

### Detailed Description

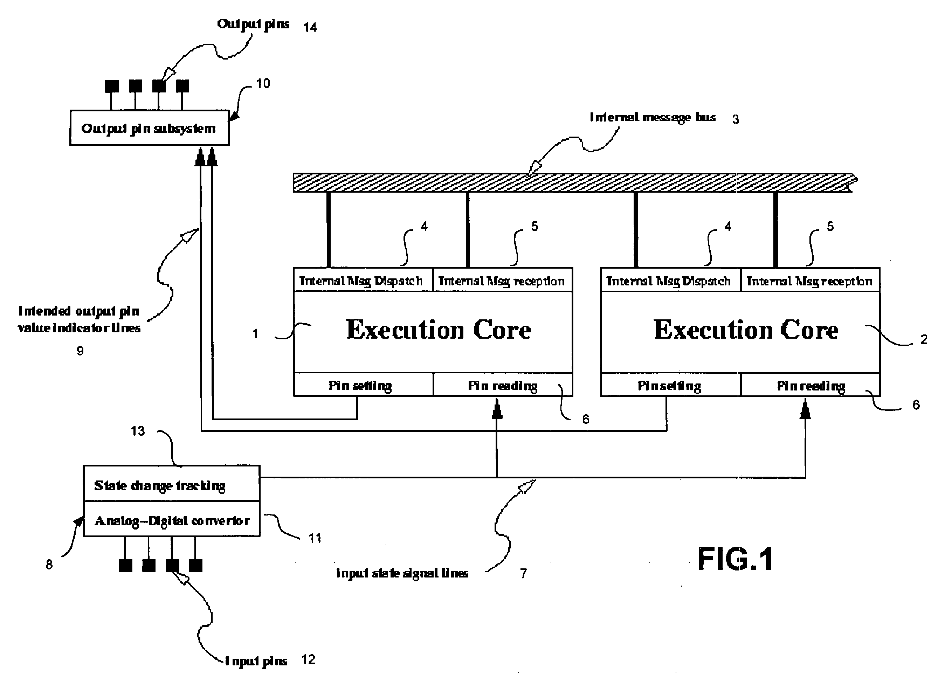

Figure 1 of the drawings illustrates the general architecture of a reprogrammable micro-controller. It has in this example two execution cores 1 and 2 each coupled to an internal message bus 3 by means of a respective internal message dispatch block 4 and a respective internal message reception block 5. Each core has a pin reading block 6 coupled to input state signal lines 7 coupled to an external input sub-system 8 and a pin setting block 9 coupled to output pin indicator lines 9 coupled to an external output subsystem 10.

### External Input Subsystem

The external input subsystem 8 in this example includes an analog-to-digital converter 11 to convert an analogue input on pins 12 into a usable digital signal. Although the intention is for this to be digitized to one of two states (lo and hi), in principle it could be digitized to numbers (most likely using integers) that represent different voltage (or current) levels.

The external input subsystem 8 also includes a state change tracking system 13. Because of the space requirements of recording changes, a history of pin changes is preferably not maintained. Instead, a count of the number of times the pin has changed state is maintained. The value is typically used for non-blocking pin reads, as blocking reads wait for a specific state (or value).

Two methods of reading pins are provided to the controller's programmer via an instruction set: blocking and non-blocking. Blocking methods potentially cause execution to stall indefinitely, and are intended for event-based triggering of code execution. Non-blocking reads do not stall execution, and are intended for polling.

### Non-blocking pin reading

This attempts to encode as much information as possible about a pin into a small number of bits. The basic idea is to have one bit that indicates the current pin state, and the remaining bits (typically 15 or 31) indicate how many times the pin has toggled since it was last read. In order to allow easier integration with higher-level languages without making assumptions about how the number would actually be represented as bit patterns (e.g. whether 2-s Complement or sign bit and magnitude would be used), this is presented as a single signed number, wherein the sign indicates the state the pin became after its first toggle (if it has toggled since the last read), and the magnitude indicates the number of times the pin has toggled. From this, it is possible to derive the state of pin before and after the first toggle, the current pin state, and the number of times the pin has toggled. The properties that can be used to determine these are summarized in Table 1.

**Table 1**

| Property | Meaning |
|---|---|
| Zero | Pin has not changed state |
| Even magnitude | Final state same as initial state \| |
| Odd magnitude | Final state opposite of initial state |
| Positive | Pin was high after first toggle |
| Negative | Pin was low after first toggle |

### Blocking pin reading

The blocking pins fall into two categories, those that block pending a change and those that block pending a state. Which is used depends on whether a state or stage change is the event of interest.

'Block pending change' means that a toggle from one state to another is awaited. This can be either a toggle in a specific direction (high->low or low->high), or one in any direction.

'Block pending state' means that a a specific state is awaited. Execution never stalls if the pin happens to already been in the awaited state.

### External Output Subsystem

Cores do not directly control the output pins 14. Instead, each core is capable of sending pin states to the external output subsystem 10 (which itself is not necessarily clocked), to translate requests into an appropriate pin output, as long as the resultant pin state is purely deterministic.

### Core interface (Request type)

Cores may have one of three different intentions when it comes to setting a particular pin: 'Set-to-high', 'set-to-low', and 'don't-care'. 'Don't care' is the view each core takes of a pin most of the time. 'Set-to-high' means that the given core wants the output pin to be set to the defined high level, and 'set-to-low' means that the given core wants the output pin to be set to a defined low level.

### Deterministic outcome

Deterministic cases are where a new pin state(s) intended by more than one core do not conflict. For a given pin, either only one core has an intention other than 'don't-care', or all the cores that have an intention other than 'don't-care' have the same intention (i.e either 'set-to-high' or 'set-to-low'). In this case, the pin becomes high or low, depending on whether the intention is set-to-high or set-to-low.

### Non-deterministic outcome

This refers to a conflict between the intentions of the cores. For instance, suppose one core wants to set a pin high at the same time as another core wants to set the pin low. Such a behaviour is considered a bug in the (distributed) program that is running on the controller, but the controller is capable of surviving such an occurrence. In other words, the resultant pin value is undefined, but the chip will not burn out.

### Internal messaging system

The internal messaging system is intended to avoid the problems associated with having a shared memory bank, by allowing each core to have its own local memory space, while providing a way for cores (and more generally, running processes) to communicate with each other. Messages bodies consist of a single word, which is the same size as a word in the memory. When a message is dispatched, it is placed in a queue on the destination core (the sending and receiving cores can be the same).

### Core Interface

To the programmer, the messaging system provides three instructions: Two for sending messages and one for receiving messages. Both sending instructions take a port number, a core number, and a value to send. Two types of message dispatch are available: Synchronised and non-synchronised. Which one is used depends on whether knowledge of reception or no interruption to the sending process is more important.

### Synchronized message passing

In this variant the dispatch instruction does not complete until the ALU (arithmetic logic unit) has received an acknowledgement (ACK) from the receiver. This ACK is sent when the message has been read from the receiving port's queue. This allows the messaging system to be used for synchronisation of programs.

### Asynchronous message passing

In this variant, once a message has been dispatched, the sending instruction completes immediately. No ACK is sent when the message is read from the receiving port, as no ACK is expected.

### Hardware Architecture

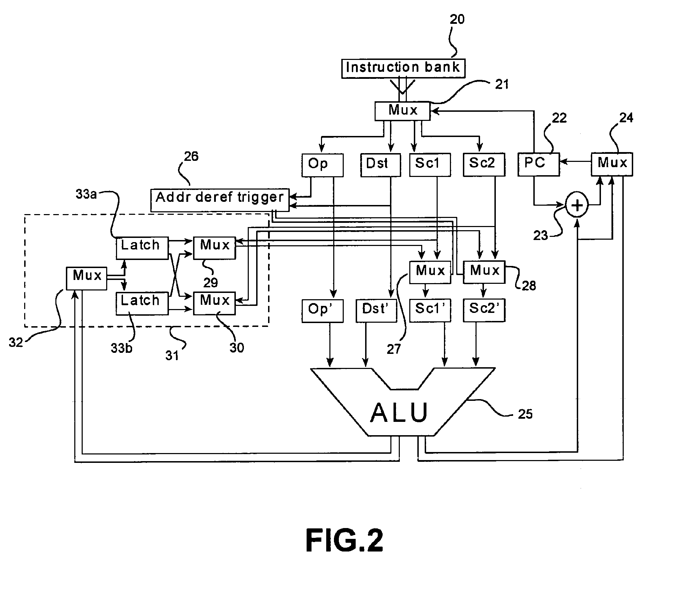

Figure 2 of the drawing illustrates the architecture of an execution core suitable for use in the present invention.

Instructions are held in and read out from an instruction bank 20 by way of a multiplexer (Mux 21) controlled by a program instruction counter latch (PC) 22. The program counter is incremented by an incrementer 23 which provides an output to one input of a Mux 24 controlled by the arithmetic unit ALU 25. A jump, i.e. to an instruction which is not the next instruction that would be selected by the action of the incrementer, may be specified by the ALU 25 to the Mux 24, which would set the counter accordingly.

The Mux 21 provides values to latches denoted by the operands that they hold, viz. Op (operation), Dst (destination), Sc1 (source I) and Src2 (source2). Operands Op and Dst control an Addrdfertrigger (address dereference trigger) 26 which can convert specified bit patterns into meory values and controls Mux 27 and Mux 28 that receive the operands Scr1 and Scr2. The operands Scr1 and Scr2 are also coupled to Mux 29 and Mux 30 respectively in a register bank 31. A mux 32 is controlled by the ALU 25 to select from a multiplicity of latches 33, 33a values for input to the Muxs 29 and 30. In practice there may be more registers (latches) but only two are shown for the sake of simplicity. Selected outputs from Mux 29 and Mux 30 are input to Mux 27 and Mux 28.

The signed values of the operands are converted to corresponding absolute values in latches Op', Dst', Scrl' and Scr2 for input to the ALU 25.

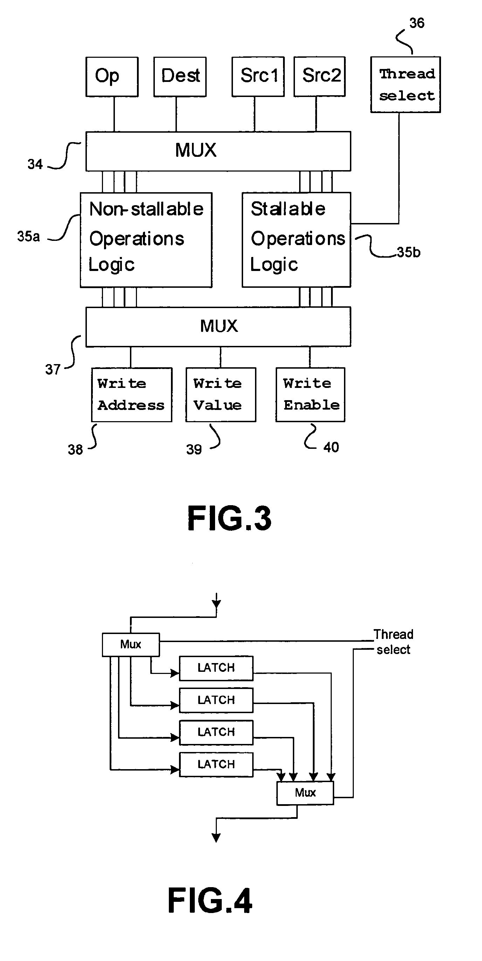

Figure 3 illustrates one embodiment of the arithmetic logic unit (ALU) 25. The operands are selected by a Mux 34 and processed by one of two logic arrays 35a, 35b. The former is used by operations that may not be stalled and the latter is used by operations that may be stalled. This allows the ALU 25 to execute another instruction whicle an instruction remains stalled. The logic array 35b includes a multiplicity of latches for holding instructions. Which latches are used are controlled by a thread select input 36. The logic arrays 35a and 35b are coupled to an out Mux 37 which provides three outputs 38, 39 and 40, denoted 'write address', 'write value' and 'write enable' respectively.

### Concurrency model

In practice the latches for the operands each comprise sets of latches as shown in Figure 4. A set may be selected by a thread select input.

The whole chipset is capable of running several threads. When a thread is created, it is assigned to an execution core, on which it remains for the duration of its lifetime. All the execution cores run in parallel, and each core is capable of supporting multiple threads.

On each core, several threads can be scheduled to run, and runtime is allotted using pre-emptive scheduling. If a process is suspended (for instance, because it is awaiting for input) it still receives clock cycles as this gives the thread a chance to evaluate whether the condition it is awaiting has been fulfilled or not.

An alternative is a non-pre-emptive mode having defined therein the appropriate instructions.. In this mode, single thread receives clock cycles until either a yield instruction is given, or pre-emptive context switching is enabled. The idea is that it removes the number of other threads running on the same core as a factor in time-critical blocks by temporarily disabling the automatic content switch, as the number of other threads running affects the time between the execution of each instruction for a given thread.

However, it introduces complications with the hardware implementation, one being that it became apparent that it was easier to rig the hardware so that the number of running threads does not affect the delay between how often a thread received runtime. Even if this were not the case, control programs that require timings that come that close to the clock cycle period are better off not depending on a single execution core anyway.

### Thread scheduling

With each execution core running multiple threads, a runtime scheduling policy is needed. One policy is to give each thread a single cycle in round-robin fashion. The problem with this policy is that it under-utilizes hardware. Assuming a four stage execution (wherein F = fetch, R = read, E = execute and W = write), three of the four stages are idle every clock cycle. An alternative is to interleave the instructions from the threads and pipeline them

Because the instructions within each execution stage are from different threads, there are no data dependencies within threads, as the Write stage is completed before the Read stage of the thread's next instruction is run. There are potential data dependencies should any memory be shared, but even if this was not the case and memory was shared, code that would lead to data dependencies would lead to a race situation anyway.

An execution stage can take more than one clock cycle. This will typically happen with the blocking instructions (described later) such as DPL and RECV, and unless there is a provision that allows the execution of one thread to 'overtake' another, a blockage in one thread will cause the stalling of all the threads. The hardware (and conceptual) solution to this is to have multiple banks of latches (one bank per thread) between each execution stage and multiplex accordingly. The execution stage of execution also has to be able to accommodate the blockage by allowing one or more stalled instructions to remain half-executed while a non-stallable instruction is executed.

### A high-level language supporting specification of time-critical operations

The basic high-level language is procedural. This is considered to be the appropriate attribute for a language where the requirement is to specify what needs to happen, and in what order. Although other languages (such as functional languages) may allow for terser specification of algorithms, runtime requirements make them unsuited for low-power devices such as micro-controllers. In addition, although they are in some situations easier to use, they are often only favoured by more advanced programmers. Scheduling is done statically, as doing it dynamically would require the overheads of a runtime system, which is not appropriate for low-power devices. In addition, dynamic scheduling implies that the code scheduling cannot be done a priori. More importantly, the consequent unpredictability implies that required code scheduling requirements cannot be guaranteed to be fulfilled.. For time-critical applications, this is unacceptable.

### Specification of code timings

Code timing is done by embedding timing-critical sections of code in blocks. Although it is possible to treat the entire program as timing-critical, allowing for just subsection to be timing-critical increases versatility. Within these timing-critical blocks (which can be nested), timing points are inserted that give an indication of when specified actions should be performed with respect to a datum. In the basic system, these timing points are the number of cycles that should have passed since the time-critical block was entered. For instance, in the following example, the first read() is executed after 100 cycles since that start, the second read is executed 300 cycles since the start, and the write is executed 500 cycles after the start.

In effect, the two reads and the write are separated by 200-cycle gaps, as shown in Figure 4. It is possible that, in hardware implementation, a read actually occupies a multiplicity of multiple cycles. In such a case, the timing point would more suitably be set to the cycle in which the input/output pins are accessed rather than to the start of the whole read/write operation.

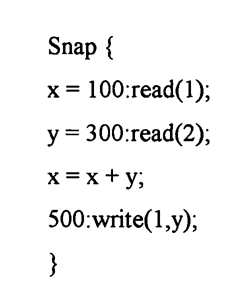

In more versatile systems, there would still be the time-critical points, but there would be a more diverse range of specifying the timing. For example it would be possible to allow a timing point number to be specified relative to another timing point, rather than merely related to the start of the block. It would also be possible to and/or specify the timing in units other than cycles (eg milliseconds) although this would involve knowing actually how long a clock cycle is.

### Comparison to existing common approaches

One alternative approach, often adopted when existing desktop system languages are modified for low-power devices, is to include delay() function calls. However, the problem with this approach is that it only allows the programmer to specify a defined amount of time that should pass between the finishing of one bit of code and the start of another.

This is unsuitable because the programmer might desire some computations to be done between two timing-critical calls. Merely providing a delay() call means that the programmer would have to know how long the extra code will take to run, and subtract this from the intended time-separation. In contrast, specifying time separations in terms of snap-points means that the programmer does not need to calculate how long a piece of code will take. This is a major help in programming, because relatively few programmers can predict exactly how long a piece of code will take to run once compiled just by looking at the high-level code

### Compiling of time-critical sections

The basic approach used to compile time-critical code is to pad out these critical sections with No-Operations instructions so that each section takes the appropriate number of clock cycles. However, there are complications if flow control is allowed to appear within the critical sections, and critical sections are allowed to contain critical subsections.

### Dealing with flow-control

Having critical subsections does not present difficulty because a subsection can be treated as a basic block; the parent section would processed after all subsections have been completed. However, the other problem of the critical sections containing flow control is more difficult to solve. Because of the number of cycles that they take up cannot be predicted (and there is the possibility it could be infinite), while-loops are not allowed within snap-blocks. However, if-statements are not unpredictable in this way, because they do not form loops. In addition, within a loop (assuming no nested loops within the part in question) it is possible to have a timing-critical section. Therefore they are allowed to appear inside critical regions. The only thing that affects how long an if-statement takes is which of the two choices it decides to execute. To make the time predictable, the code block that is the shorter of the two possibilities may be padded out so that both alternatives will take the same length of time to execute. The if-statement can then be treated as a basic block with a known constant execution time. In practice there is the extra complication in that if-statements and snap-blocks can contain each other (and themselves) recursively, so the entire padding procedure will typically be done in a singe monolithic depth-first pass.

### Tagging of time-critical code sections

The tagging of time-critical code sections comprises adding marker pseudo-instructions to the instruction stream during code generation. These markers provide information on the boundaries of snap-blocks, basic-blocks, and alternatives of if-statements. Timing is then done in a separate post-processing pass over the instructions. A separate pass is used because doing timing depends on knowing how long sections of unpadded code will take to execute, and this cannot be calculated for sure until the code has been generated.

The resulting tagged code, with its marking pseudo-instructions is then passed through timing scheduling routines. One advantageous feature of this approach is that basic-block code optimisation can be inserted at this point, and it does not cause timing problems since time scheduling is done on the optimised instructions.

### Optimisation by allowing non-critical instructions to cross section borders

It is possible to do optimisations that allow instructions to be moved across a snap-block related boundary point while maintaining correctness. However, this requires knowledge of which instructions are safe to allow permission to cross. Typically only the reading and writing instructions have critical positioning. Although there are still inter-instruction dependencies (such as calculation of a value that a write instruction uses), not all instructions have to be on the specified side of a critical-timing section.

### Conversion of tagged instructions into scheduled and padded code

In the timing scheduling pass, the instruction stream is converted into a tree format in which basic blocks are stored in leaf nodes, and terminals correspond to if-statements and snap-blocks. The marker pseudo-instructions that are inserted during code generation are intended to help in the construction of this tree structure.

Since timing scheduling is a recursive process, converting the code stream into a tree structure allows for easier analysis, since the instruction stream is essentially flat, whereas it needs to be analysed as a hierarchical structure in a depth-first manner for the correct amount of padding to be inserted. Having the intermediate representation was mainly done to aid development. Once the recursive padding has been done, the tree is converted back into flat assembly code, with all the marker pseudo-instructions stripped out.

### Multi-cycle No-Operation instructions

In most cases, padding involves inserting No-Operation instructions. To save on code size, a No-Operations instruction that lasts a specified number of clock cycles is included. As a result, each piece of padding only takes up a single instruction. This is more conveneient than using a multiplicity of fixed-cycle No-Operation instructions and/or a delay loop.

### Code generation and scheduling

The first stage of code generation involves traversing the parse tree, and resolving all the variable names into addresses. Once this is done, code generation is syntax-generated, and is done in a pass over the modified parse tree. The method is preferable because it is a direct way to implement code generation, and it allows easy exploitation of Haskell's pattern matching while traversing the parse tree. The resulting code, with its marking pseudo-instructions, is then passed through the timing scheduling routines. One feature of this approach is that basic-block code optimisation can be inserted at this point, and it does not cause timing problems since time scheduling is done on the optimised instructions. It is possible to do optimisations that allow instructions to be moved across a snap-block related boundary point while maintaining correctness, but it involves making assumptions about what statements are safe to move across boundaries and what is not.

### Timing scheduling

In the timing scheduling pass, the instruction stream is converted into a tree format in which basic blocks are stored in leaf nodes, and terminals correspond to if-statements and snap-blocks. The marker pseudo-instructions that are inserted during code generation are intended to help in the construction of this tree structure.

Since timing scheduling is a recursive process, converting the code stream into a tree structure allows for easier analysis, since the instruction stream is essentially flat, whereas it needs to be analysed as a hierarchical structure in a depth-first manner for the correct amount of padding to be inserted. Having the intermediate representation was mainly done to aid development. Once the recursive padding has been done, the tree is converted back into flat assembly code, with all the marker pseudo-instructions stripped out.

### Example

Set out below is the source for a control program in the high-level language. The program sets and clears output pins in a fixed sequence.

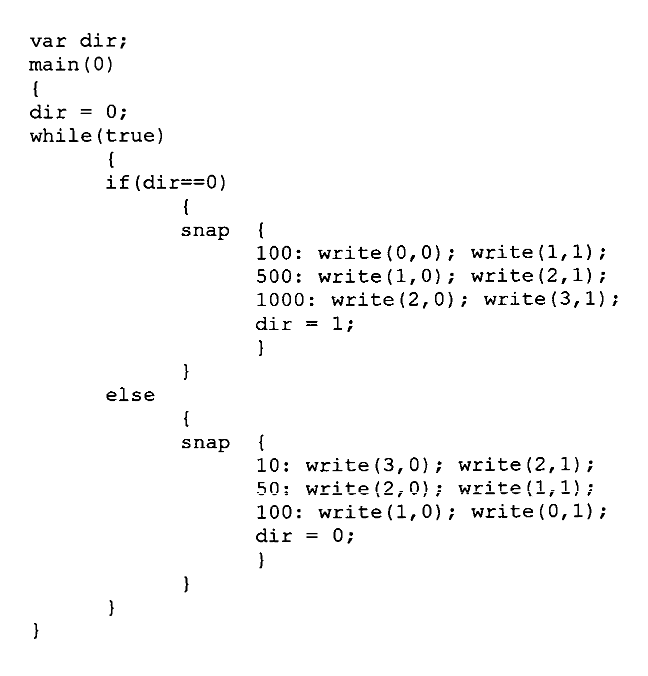

This program has critical timing points in the 'if section at 100, 500 and 1000 cycles after the start and critical timing points in the 'else' section at 10, 50 and 100 cycles from the start.

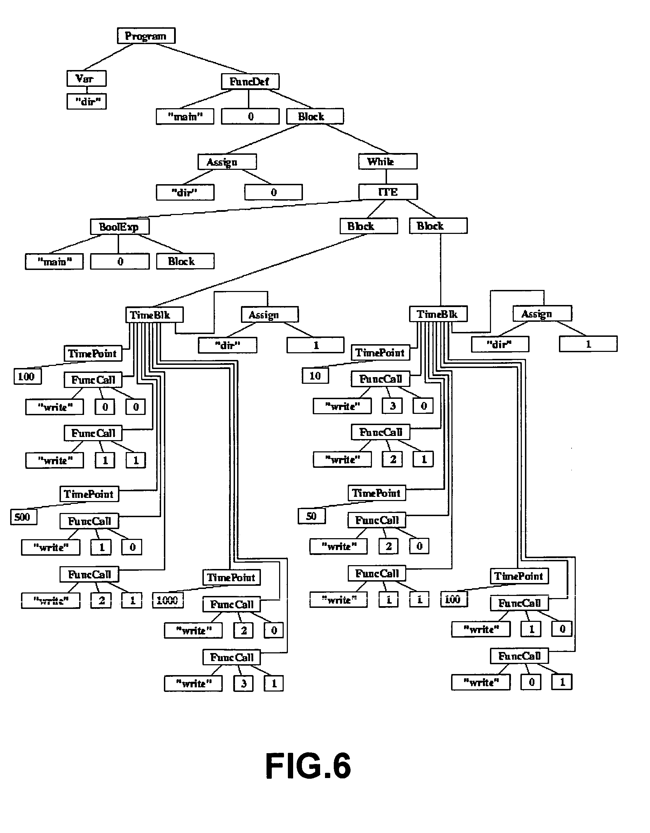

The parse tree for the program is shown in Figure 6.

### Assembly language

The assembly language and the associated bit-patterns for the prototype hardware implementation are detailed below. 4-bit addressing in 16-bit fixed-size instructions are used. For simplicity, the 16 instruction bits are divided up into four 4-bit nibbles. Although some of the bits within an instruction have a different purpose (address, extra instruction identifier bits, or constant) depending on context, the instruction may be treated as four nibbles rather than 16 bits; this convention helps to indicate the different purposes.

### Reference Assembly language

| **Assembly file format** | |
|---|---|
| instruction | = (labelDef)* opcode (operand) * |
| opcode | = [a-zA-Z]+[a-zA-Z0-9]* |
| operand | = labelUse \| [&*#$]?[0-9]+ |
| labelDef | = [a-zA-Z][a-zA-Z0-9]*':' |
| labelUse | = [a-zA-Z][a-zA-Z0-9]* |

| **Assembly set overview** | | | | |
|---|---|---|---|---|
| TGL | dst | val | | Block until given pin next toggles |
| TGLH | dst | val | | Block until given pin next does a lo->hi toggle |
| TGLH | dst | val | | Block until given pin next does a hi->lo toggle |
| DPH | dst | val | | Block until given pin becomes hi (if it isn't already). |
| DPL | dst | val | | Lock until given pin becomes lo (if it isn't already). |
| RDPN | pin | dst | | Non-blocking pin read. |
| | | | | zero = Pin not read since last RDPN +ve = Pin toggled to hi after last read - ve = Pin toggled to lo after last read The magnitude of the number is the number of times pin has toggled since the last read. From this, the current state can be derived (eg +4 is lo) |
| WTPN | pin | val | | If val=0 set pin to lo; else set it to hi (non-blocking). |
| SLCT | dst | mask | | Blocks until one of the pins flagged by given (bitmask) mask toggles. dst becomes id of pin that changed. |
| RDTM | dst | | | dst := clock cycles since previous call, i.e. since the previous execution of the same instruction. |
| RDTMRS | | | | reset of clock cycle count. |
| RECV | dst | | | mem[dst] := First message on receive queue (message is removed; blocks if queue empty; may ACK) |
| SEND | cid | src | port | Dispatches mem[src] as message to queue on given port on core cid. Blocks until ACK'd |
| DISP | cid | src | port | Dispatches mem[src] as message to queue on given port on core cid (non-blocking) |
| LDC | dst | #val | | mem[dst] := val |
| ADD | dst | src1 | src2 | dst := src1 + src2 |
| SUB | dst | src1 | src2 | dst := src1 - src2 |
| SHL | dst | src1 | src2 | dst := src1 << src2 |
| SHR | dst | src1 | src2 | dst := src1 >> src2 |
| AND | dst | src1 | src2 | dst := src1 & src2 |
| IOR | dst | src1 | src2 | dst src1 \| src2 |
| XOR | dst | src1 | src2 | dst := src1 XOR src2 |
| MOV | dst | src | | dst := src |
| CMPZ | dst | src1 | src2 | dst := if(src1=src2) 1 else 0 |
| CMPL | dst | src1 | src2 | dst := if(src1<src2) 1 else 0 |
| BEQ | #dis | src1 | src2 | PC+=dis if src1=src2 |
| CALL | #npc | #stkAmt | | SP+=-(stkAmt+2) mem[SP-1] := stkAmt+2 mem[SP-2] := PC PC := npc |
| RETN | | | | PC := mem[SP-2] SP += -stkAmt |
| BR | #val | | | PC += <val> |
| HALT | | | | Halts entire chip (emulation only) |
| NOP | | | | No operation |
| NOPD | delay | | | No operation for 'delay' cycles |
| KILL | | | | Terminates execution on core |
| SPWN | #pc | #core | | Sets up process on given core. |

### Operand prefixes

Each operand can be pre-pended with one of four type indicators, and these indicate how the value of an operand should be interpreted. In the reference set, any input value can be an address of any type or a constant, and any output value can be an address of any type (though not a constant). A constant is assumed of the prefix is missing. The four prefixes are all shown below:

| | | |
|---|---|---|
| &val | mem[val] | Absolute memory address |
| $val | mem[val+SP] | Relative memory address (relative to StackPointer) |
| #val | val | Constant |
| *val | mem[mem[val]] | Indirect memory addressing (pointer following) |

### Instruction-specific notes

| **Blocking pin reading calls** | |
|---|---|
| TGL dst <val> | Block until given pin next toggles |
| TGLH dst <val> | Block until given pin next does a lo->hi toggle |
| TGHL dst <val> | Block until given pin next does a hi->lo toggle |

These three calls all wait for a pulse (ie toggle) to appear in the given input wire. Essentially these are intended for use in waiting for an specified event that is expected to happen rather than checking for a specified state.

| | |
|---|---|
| DPH dst <val> | Block until given pin becomes hi (if it isn't already) |
| DPL dst <val> | Block until given pin becomes lo (if itisn't already) |

The Delay-Pending instructions are meant for the detection of a pin state which may in fact already be in effect at the time the instruction is called, rather than waiting for a change explicitly after the instruction is executed..

RDPN pin dst
Non-blocking pin read.
zero = Pin not read since last RDPN
+ve = Pin toggled to hi after last read
- ve = Pin toggled to lo after last read
The magnitude of the number is the number of times pin has toggled since the last read. From this, the current state can be derived (eg +4 is lo)

This provides a way of getting a non-blocking status 'snapshot' of a given pin.

SLCT dst mask Blocks until one of the pins flagged by given (bit-mask) mask
toggles. Dst becomes id of pin that changed.

This instruction allows a single thread to act differently depending on which input pin toggles. It is included only for convenience because it is preferable to have different inputs handled by different threads where possible.

| **Output pin setting** | |
|---|---|
| WTPN pin <val> | If val=0 set pin to lo; else set it to hi (non-blocking) |

Pin setting is non-blocking because, being an output under control of the program itself, it is known that any change takes effect immediately. Whatever effect this change has is beyond the scope of the chipset itself. If the pin is only supposed to be set for a fixed length of time, then it is the responsibility of the programmer to change the pin back to the 'idle' state after the appropriate length of time.

| **Internal messaging instructions** | |
|---|---|
| RECV dst | mem[dst] := 1st msg on receive queue (blocks if empty; may ACK) |
| SEND cid src | Dispatches mem[src] as message to core cid. Blocks until ACKed |
| DISP cid src | Dispatches mem[src] as message to core cid (non-blocking). |
| RECV dst | mem[dst] := 1st msg on receive queue (blocks if empty; may ACK) |

Both blocking (synchronous) and non-blocking (asynchronous) message passing is provided. Which one is used depends on whether knowledge of receipt or code timing is more important as far as the sending thread is concerned. If a message buffer overflows, the surviving messages are the ones that are already in the queue.

| **Arithmetic instructions** | |
|---|---|
| LDC dst <val> | mem[dst] := val |

Load-Constant loads the given constant into the given address. This instruction is defined because constant loading typically may involve more bits than is typically available for an address, and it negates the need for the other arithmetic operands to have flags indicating whether the value is an address or a constant.

| | |
|---|---|
| ADD dst src1 src2 | dst := src1 + src2 |
| SUB dst src1 src2 | dst := src1 - src2 |
| SHL dst src1 src2 | dst := src1 << src2 |
| SHR dst src1 src2 | dst := src1 >> src2 |
| AND dst src1 src2 | dst := src1 & src2 |
| IOR dst src1 src2 | dst := src1 \| src2 |
| XOR dst src1 src2 | dst := src1 XOR src2 |
| CMP dst src1 src2 | if(src1=src2) dst := 0 else dst := sign of src2-srcl |
| CMPZ dst src1 src2 | if(src1==src2) dst := 1 else dst := 0 |
| CMPL dst src1 src2 | if(src1<src2) dst := 1 else dst := 0 |

These are all standard arithmetic operations. Comparison operations are treated as arithmetic operations because of the similarity in which the way arithmetic and Boolean expressions are compiled.

| **Branch instructions** | |
|---|---|
| BLT dis src1 src2 | PC+=dis if src1<src2 |
| BEQ dis src1 src2 | PC+=dis if src1==src2 |
| BNEQ dis src1 src2 | PC+=dis if src1!=src2 |
| BR <val> | PC += <val> |

These provide both conditional and unconditional branches. The compiler only actually uses BEQ and BR, but all are implemented for completeness.

| **Miscellaneous instructions** | |
|---|---|
| NOP | No operation |
| NOPD <delay> | No operations for <delay> cycles. Used in Snap-block padding |
| KILL | Kills calling thread |
| SPWN <pc> <coreID> <sp> | Creates a new thread on given core, and given initial PC and SP. |

| **Extensions** | |
|---|---|
| HALT | Halts entire chip (for an emulator only) |

This is really intended for debugging, and therefore its implementation is only in software.

| | |
|---|---|
| CALL npc stkAmt | SP+=-(stkAmt+2); |
| | mem[SP-1] := stkAmt+2 |
| | mem[SP-2] := PC |
| | PC := npc |
| RETN | PC := mem[SP-2] |
| | SP += -stkAmt |

These provide primitives required for doing a function call from an arbitrary location. Function calls were removed because there may be no mechanism for segmentation between threads on the same core.

| | |
|---|---|
| JMP src1 | PC := src1 (Computed branch) |
| JMPR src1 | PC += src1 (Computed relative branch) |

These provide computed branches, and are included as the standard branches do not take addresses for the destination program counter value. If relative branches are introduced, then this is what BR with an address would assemble to.
- DSCT: Disable context-switching on current core
- ENCT: Enable context-switching for current core

These disable or re-enable the thread cycling on the given execution core. They need not be implemented because thread scheduling policies can achieve the same effect.

### High-level language reference

| **Lexical structure** (employing 'Regular Expressions') | |
|---|---|
| VAR | = 'var' |
| WHILE | = 'while' |
| IF | =[iI][fF] |
| ELSE | = 'else' |
| IDENT | = [a-zA-Z]([a-zA-Z0-9]*) |

| **Syntactic structure (based on 'Backus Noir Form')** | |
|---|---|
| program | == gvar? funcDef+ |
| gvar | = var |
| var | = VAR IDENT (',' IDENT)* ';' |
| funcdef | = IDENT '(' INT ')' funcBody |
| funcBody | ='{'stmt*'}' |
| block | ='{'stmt*'}' |
| stmt | = IDENT stmt2 |
| | WHILE'(' condExp ')' stmt ';' |
| | block |
| | snapBlock |
| stmt2 | = funcCall \| '=' exp |
| condExp | = ('!'* (bexp \| '(' condExp ')')) (cond condExp)? |
| cond | = ('∥' \|'&&') |
| bexp | = (exp bexpop exp) \| TRUE |
| bexpop | = ('='∥ '<' ∥ '>') |
| exp | ='-'? factor (('<<'\|'>>') exp)* |
| expr | = factor (('<<'\|'>>') exp)* |
| factor | = atom (('-'\|'+'\|'&'\|'^') expr)* |
| atom | = IDENT \| INT \|bexp \| funcCall bexp :='(' exp ')' |
| funcCall | = IDENT '(' ( exp (','exp)* )?')' |
| snapBlock | = SNAPBLOCK'{' (INT':' \| stmt )*'}' |

### Attribute grammar

| ***Attribute*** | ***Purpose*** |
|---|---|
| .temp | Temporary address offset (inherited). Indicates start of temporary local addresses |
| .taddr | Target address (inherited). This is where the result of a grammar rule's calculation is placed, and any (local)address above it can be used as temporary variables. |
| .code | Program code (synthesized). |
| .addr | Address of variable (synthesized). |
| .value | Token's numeric literal value |
| . string | Identifier token's string |
| .name | Function identifier (synthesized string) |
| .core | Core ID number (synthesized integer literal). Used to indicate where a thread function should run. |

A newCondNumber() function is one that returns a different number every time it is called. It is used to make the labels in while and if statements unique.

| **Variable definitions and function headers** | |
|---|---|
| Program -> Gvar FuncDefs | Gvar.temp = 0 FuncDefs temp = Gvar maxaddr |
| | Program.code = FuncDefs.code |
| Gvar -> Vars',' | Gvar.temp = Vars.temp |
| | Gvar.maxaddr = Vars.maxaddr |
| Gvar -> | Gvar.maxaddr = Gvar.temp |
| Vars -> 'var' ident MoreVar | MoreVar.temp = Vars.temp+1 |
| | Vars.maxaddr = MoreVar.maxaddr |
| MoreVar ->',' ident MoreVar | MoreVar.temp = Vars.temp+1 |
| | Vars.maxaddr = MoreVar.maxaddr |
| MoreVar -> | More Vars.maxaddr = MoreVars.temp |
| FuncDefs -> FuncDef | FuncDef.temp = FuncDefs.temp |
| | FuncDefs.code = FuncDef.code |
| FuncDefs -> FuncDef FuncDefs1 | FuncDef.temp = FuncDefs.temp |
| | FuncDefs1.temp = FuncDefs.temp |
| | FuncDefs.code = FuncDef.code ∥ |
| | FuncDefs1.code |
| FuncDef -> ident | FuncBody.temp = FuncBody.temp |
| '(' int')' | FuncDef.code = FuncBody.code |
| | FuncBody FuncDef.name = ident. string |
| | FuncDef.core = int.value |
| FuncBody -> '{' Stmts'}' | Stmts.temp = FuncBody.temp |
| | FuncBody.code = Stmts.code. |

| **Statements** | |
|---|---|
| Stmts -> Stmt Stmts1 | Stmt.temp = Stmts.temp |
| | Stmts1 temp = Stmts temp |
| | Stmts.code = Stmt.code ∥ Stmts1.cod |
| Stmts -> | Stmts.code = "" |
| Stmt -> ident '=' Exp ';' | Exp.taddr = Stmt.temp |
| | Stmt.code = Exp.code ∥ |
| | MOV ident.addr Stmt.temp |
| Stmt -> ident '(' CallParams ');' | CallParams.taddr = Stmt.temp |
| | CallParams.temp = Stmt.temp+1 |
| | Stmt.code = |
| | CallParams.code ∥ callCode |
| Stmt -> while | CondExp.taddr = Stmt.temp |
| '(' CondExp ')' | CondExp.temp = Stmt.temp+1 |
| Stmt | Stmt1.temp = Stmt.temp |
| | Stmt.code = |
| | whileXstart: ∥ |
| | CondExp.code ∥ |
| | BEQ whileXend CondExp.taddr #0 ∥ |
| | Stmt.code ∥ |
| | BR whileXstat ∥ |
| | whilexend: |
| | (where X = newCondNumber();) |
| Stmt if'(' CondExp ')' | CondExp.taddr = Stmt.temp |
| Stmt1 'else' Stmt2 | CondExp.temp = Stmt.temp+1 |
| | Stmt1.temp = Stmt.temp |
| | Stmt2 temp = Stmt temp |
| | Stmt.code = CondExp.code ∥ |
| | BEQ ifXelse CondExp.taddr #0 ∥ |
| | Stmt1.code ∥ |
| | BR ifXend ∥ I |
| | fXelse: ∥ |
| | Stmt2.code |
| | (where X = newCondNumber();) |
| Stmt -> Block | Block.temp = Stmt.temp |
| | Stmt.code = Block.code |
| Stmt -> SnapBlock | SnapBlock.temp = Stmt.temp |
| | Stmt.code = SnapBlock.code |
| Stmt2 -> ident '=' Exp ';' | Exp.taddr = Stmt2.temp |
| | Exp.temp = Stmt2.temp |
| | Stmt2.code = Exp.code ∥ |
| | MOV ident.addr Stmt2.temp |
| Stmt2 -> ident '(' CallParams');' | CallParams.taddr = Stmt.temp |
| | CallParams.temp = Stmt.temp+1 |
| | Stmt2.code = |
| | CallParams.code ∥ callCode |
| Stmt2 -> while '('CondExp')' Stmt | Stmt2.code = whileXstart: ∥ |
| | CondExp.code ∥ |
| | BEQ whileXend CondExp.taddr #0 ∥ |
| | Stmt.code ∥ |
| | BR whileXstat ∥ |
| | whilexend: |
| | (where X = newCondNumber(); ) |
| Stmt2 -> if'(' CondExp ')' | CondExp.taddr = Stmt2.temp |
| Stmt21 else Stmt22 | Stmt21.temp = Stmt.temp |
| | Stmt22 temp = Stmt temp |
| | Stmt2.code = CondExp.code ∥ |
| | BEQ ifXelse CondExp.taddr #0 ∥ |
| | Stmt21.code ∥ |
| | BR ifXend ∥ |
| | Stmt22.code |
| Stmt2 -> Block | Block.temp = Stmt2.temp |
| | Stmt.code = Block.code |
| Stmt2 -> SnapBlock | SnapBlock.temp = Stmt2.temp |
| | Stmt.code = SnapBlock.code. |

| **Expressions** | |
|---|---|
| Exp -> '-' Expr | Expr.taddr = Exp.taddr |
| | Exp.code = Expr.code ∥ |
| | SUB Exp.taddr Exp.taddr |
| Exp -> Expr | Expr.taddr = Exp.taddr |
| | Exp.code = Expr.code |
| Expr -> Atom | Atom.taddr = Expr.taddr |
| | Expr.code = MOV Expr.taddr Atom.taddr |
| Expr -> Atom '-' Exp | Atom.taddr = Expr.taddr |
| | Exp.taddr = Expr.taddr+1 |
| | Expr.code = Atom.code ∥ Exp.code ∥ |
| | SUB Expr.taddr Atom.taddr Exp.taddr |
| Expr -> Atom '+' Exp | Atom.taddr = Expr.taddr |
| | Exp.taddr = Expr.taddr+1 |
| | Expr.code = Atom.code ∥ Exp.code ∥ |
| | ADD Expr.taddr Atom.taddr Exp.taddr |
| Expr -> Atom'^' Exp | Atom.taddr = Expr.taddr |
| | Exp.taddr = Expr.taddr+1 |
| | Expr.code = Atom.code ∥ Exp. code ∥ |
| | XOR Expr.taddr Atom.taddr Exp.taddr |
| Expr -> Atom '&' Exp | Atom.taddr = Expr.taddr |
| | Exp.taddr = Expr.taddr+1 |
| | Expr.code = Atom.code ∥ Exp.code ∥ |
| | AND Expr.taddr Atom.taddr Exp.taddr |
| Expr -> Atom '\|' Exp | Atom.taddr = Expr.taddr |
| | Exp.taddr = Expr.taddr+1 |
| | Expr.code = Atom.code ∥ Exp.code ∥ |
| | IOR Expr.taddr Atom.taddr Exp.taddr |
| Expr -> Atom'«' Exp | Atom.taddr = Expr.taddr |
| | Exp.taddr = Expr.taddr+1 |
| | Expr.code = Atom.code ∥ Exp.code ∥ |
| | SHL Expr.taddr Atom.taddr Exp.taddr |
| Expr -> Atom '>>' Exp | Atom.taddr = Expr.taddr |
| | Exp.taddr = Expr.taddr+1 |
| | Expr.code = Atom.code ∥ Exp.code ∥ |
| | SHL Expr.taddr Atom.taddr Exp.taddr |
| Atom -> ident | Atom.code = MOV Atom.taddr ident.addr |
| Atom -> '(' Exp ')' | Exp.taddr = Atom.taddr |
| | Atom.code = Exp.code |
| Atom -> ident '(' CallParams ')' | CallParams.taddr = Atom.taddr |
| | Atom.code = |
| | CallParams.code ∥ callCode |
| Atom -> int | Atom.code = "LDC" Atm.taddr int.value. |

| **Condition statements & Boolean expressions** | |
|---|---|
| CondExp -> bexp | Bexp taddr = Condexp taddr |
| | CondExp.code = Bexp.code |
| CondExp -> '(' condExp1 ')' | CondExp2 taddr = CondExp taddr |
| | CondExp.code = CondExp2.code |
| CondExp -> CondExp1 '&&' CondExp1 | CondExp1.taddr = CondExp.taddr |
| | CondExp2 taddr = CondExp taddr+1 |
| | CondExp.code = CondExp1.code |
| | ∥ CondExp2. code ∥ |
| | AND CondExp1.taddr CondExp2.taddr |
| CondExp -> CondExp '∥' CondExp | CondExp1.taddr = CondExp.taddr |
| | CondExp2 taddr = CondExp taddr+1 |
| | CondExp.code = CondExp1.code ∥ |
| | CondExp2.code ∥ |
| | IOR CondExp1.taddr CondExp2.taddr |
| CondExp -> '!' '(' CondExp1 ')' | Condexp1 taddr = CondExp taddr |
| | CondExp.code = CondExp1.code ∥ |
| | XOR CondExp.taddr CondExp1.taddr #1 |
| CondExp -> '!' Bexp | Bexp taddr = CondExp taddr |
| | CondExp.code = Bexp.code ∥ |
| | XOR CondExp.taddr Bexp.taddr #1 |
| Bexp -> Exp1 '<' Exp2 | Exp1.taddr = Bexp.taddr |
| | Exp2 taddr = Bexp taddr+1 |
| | Bexp.code = exp1.code∥ Exp2.code ∥ |
| | CMPL Bexp.taddr Exp1.taddr Exp2.taddr |
| Bexp -> Exp1 '>' Exp2 | Exp1.taddr = Bexp.taddr |
| | Exp2 taddr = Bexp taddr+1 |
| | Bexp.code = exp1.code∥Exp2.code∥ |
| | CMPL Bexp.taddr Exp2.taddr |
| | Exp1.taddr |
| Bexp -> Exp1 '==' Exp2 | Exp1.taddr = Bexp.taddr |
| | Exp2 taddr = Bexp taddr+1 |
| | Bexp.code = exp1.code ∥ Exp2.code ∥ |
| | CMP Bexp.taddr Exp1.taddr Exp2.taddr |
| Bexp -> true | Bexp.code = LDC Bexp.taddr #1 |

| **Blocks, Call Parameters, and Critical Sections** | |
|---|---|
| Block -> '{' Stmts '}' | Stmts taddr = Block taddr |
| | Stmts.code = Block.code |
| CallParams -> Exp | Exp.taddr = CallParams.taddr |
| | CallParams.code = Exp.code |
| CallParams -> Exp ',' CallParams 1 | Exp.taddr = CallParams.taddr |
| | CallParams1.taddr = CallParams.taddr+1 |
| | CallParams. code = |
| | Exp.code ∥ CallParams1.code |
| CallParams -> | CallParams.code = "" |
| SnapBlock -> 'snap' | SnapBlock.code = SmapStmts.code |
| '{' snapStmts'}' | |
| SnapStmts -> SnapStmt snapStmts | Stmts.code =Stmt.code ∥ Stmts. code |
| SnapStmts -> | Stmts.code = "" |
| SnapStmt -> sint | SnapInt.value = sint.value |
| SnapStmt -> Stmt2 | SnapStmt.code = Stmt2.code. |

### Micro-controller assembly language

### Instruction bit-codes

V indicates a hard-coded constant, x indicates don't care, 1 and 0 indicate true and false respectively. All other letters are treated as register addresses. The six instructions between MOV and ADD are undefined.

| | | | | |
|---|---|---|---|---|
| TGL d | s | - | 1111-dddd-ssss-0000 | |
| TGLH d | s | - | 1111-dddd-ssss-0001 | |
| TGLL d | s | - | 1111-dddd-ssss-0010 | |
| DPH d | s | - | 1111-dddd-ssss-0011 | |
| DPL d | s | - | 1111-dddd-ssss-0100 | |
| RDTM d | - | - | 1111-dddd-dddd-0101 | |
| RECV d | (p) | - | 1111-dddd-pppp-0110 | |
| SLCT d | m | - | 1111-dddd-mmmm-0111 | |
| RDPN p | d | - | 1111-dddd-pppp-1000 | |
| MOV d | s | - | 1111-dddd-ssss-1001 | |
| - d | s | - | 1111-dddd-ssss-1010 | |
| - d | s | - | 1111-dddd-ssss-1011 | |
| - d | s | - | 1111-dddd-ssss-1100 | |
| - d | s | - | 1111-dddd-ssss-1101 1 | |
| - d | s | - | 1111-dddd-ssss-1110 | |
| - u | s | - | 1111-dddd-ssss-1111 | |
| | | | | |
| ADD d | s | t | 0001-dddd-ssss-tttt | |
| SUB d | s | t | 0010-dddd-ssss-tttt | |
| SHL d | s | t | 0011-dddd-ssss-tttt | |
| SHR d | s | t | 0100-dddd-ssss-tttt | |
| AND d | s | t | 0101-dddd-ssss-tttt | |
| IOR d | s | t | 0110-dddd-ssss-tttt | |
| XOR d | s | t | 0111-dddd-ssss-tttt | |
| CMPZ d | s | t | 1000-dddd-ssss-tttt | |
| CMPL d | s | t | 1001-dddd-ssss-tttt | |
| SEND c | s | p | 1010-dddd-ssss-pppp | |
| DISP c | s | p | 1011-dddd-ssss-pppp | |
| BEQ d | s | t | 1100-dddd-ssss-tttt | |
| SPWN p | c | - | 1101-dddd-pppp-cccc | |
| LDC d | #v | - | 1110-dddd-vwv-vwv | |
| | | | | |
| NOP - | - | - | 0000-0000-xxxx-xxxx | |
| WTPN p | s | - | 0000-1001-pppp-ssss | pppp,ssss = addrs |
| NOP - | - | - | 0000-0010-xxxx-xxxx | |
| NOPD #v | - | - | 0000-0011-vvvv-vvvv | |
| KILL - | - | - | 0000-0100-xxxx-xxxx | |
| BR #v | - | - | 0000-0101-vvvv-vvvv. | |

## Claims

1. A micro-controller arranged to operate in accordance with a program language, ***characterized in that*** timing of a specified action relative to a datum is explicitly specified by a timing point within a block of program code.

2. A micro-controller according to claim 1 wherein a timing point is specified relative to the start of a program.

3. A micro-controller according to claim 1 or 2 wherein a timing point is specified relative to another timing point.

4. A micro-controller according to any foregoing claim wherein the micro-controller operates in accordance with an assembly code including an instruction that specifies the performance of no operation for a specified plurality of machine cycles.

5. A micro-controller according to any of claims 1 to 4, and arranged to operate under the control of an assembly code including an instruction (TGL; TGLH; TGLL; SLCT) that does not complete until a specific change in an input to a terminal pin occurs.

6. A micro-controller arranged to operate under the control of an assembly code including an instruction (TGL; TGLH; TGLL; SLCT) that does not complete until a specific change in an input to a terminal pin occurs.

7. A micro-controller according to claim 5 or 6 wherein the instruction (TGLH; TGLL) specifies a given state which must be present.

8. A micro-controller according to claim 5 or 6 wherein the instruction (SLCT) specifies a change in one of a multiplicity of pins.

9. A micro-controller according to any of claims 5 to 8 and wherein the code includes an instruction (RDPN) which returns the state of a terminal pin and the number of times that the pin has toggled since a previous read.

10. A micro-controller according to any of claims 5 to 9 wherein the code includes an instruction (RDTM) that returns the number of cycles that have elapsed since a previous execution of the same or a different instruction.

11. A method of operating a micro-controller ***characterized by*** explicitly specifying the timing of a specified action relative to a datum by an explicit timing statement within a block of program code.

12. A high-level program language targeting a micro-controller and allowing the explicit specification of the timing of a specified action relative to a datum by means of an explicit timing statement within a block of program code.
